# EUROPEAN PATENT SPECIFICATION

(11) **EP 2 293 360 B1**
(45) Date of publication and mention of the grant of the patent: **13.06.2018**
(21) Application number: 10196207.4
(22) Date of filing: 21.12.2004
(51) Int. Cl.: H01M 2/06, H01M 2/30, H01M 10/06

(54) **BATTERY PART**
BATTERIETEIL
PIECE DE BATTERIE

(30) Priority: 02.01.2004 US 533924 P; 18.03.2004 US 804401; 13.12.2004 US 11362
(43) Date of publication of application: 09.03.2011
(62) Divisional of application: 04816050.1
(73) Proprietor: WATER GREMLIN COMPANY, White Bear Lake, MN 55110 (US)
(72) Inventor: Ratte, Robert, W., North Oaks, MN 55127 (US); Peterson, Norman, E., Wyoming, MN 55092 (US)
(74) Representative: Viering, Jentschura & Partner mbB Patent- und Rechtsanwälte

(56) References cited:
- CH-A- 371 154
- DE-B- 1 146 149
- GB-A- 1 245 255
- JP-A- 7 235 286
- US-A- 1 411 414
- US-A- 4 775 604
- US-B1- 6 644 084

## Description

### FIELD OF THE INVENTION

This invention relates generally to battery parts and, more specifically, to a battery part and a method of flaring an acid ring to form an enhanced sealing region with minimized opportunities for stress cracks in the battery part .

### BACKGROUND OF THE INVENTION

Battery parts such as battery terminals, which are typically cold formed or die cast, are normally secured to a container with a portion of the battery terminal located inside the container and a further portion located outside the container. The battery containers, which are typically plastic such as polyethylene, are molded around a set of acid rings that are located on the portion of the terminal that is located within the container. The acid rings provide an extended interface and consequently a tortuous path to inhibit or prevent electrolyte from escaping from the battery container. Because the acid must follow an extended interface to escape this type of sealing, with a set of concentric acid rings, is often referred to as a labyrinth seal.

Because the battery terminals are cast or cold formed the radially protruding acid rings are generally formed with either a rectangular cross sectional shape or a slight outward taper to facilitate removal of the battery terminals from the mold.

While battery terminals have a generally rectangular cross sectional shape are used extensively other shaped acid rings have been used in order to prevent the plastic container from shrinking away from the terminal and upsetting the interface between the battery part and the container which could cause leakage of electrolyte. Generally, these type of acid rings provide lateral engagement between the acid ring and the container.

For example, the 1971 United Kingdom patent specification GB1236495 discloses a battery terminal wherein two acid ring are bent toward each other to provide a dovetail shaped gap that extends along the entire length of the acid ring so that it enables the two adjacent acid rings to form a dovetail joint with the battery container and thereby provide lateral engagement between the acid ring and the container.

The 1971 United Kingdom patent specification GB 1,245,255 discloses three acid rings that have been deformed to create a dovetail shaped gap between adjacent acid rings with the dovetail gap extending along the entire length of the acid ring to form two dove tail joints with the container and thereby provide lateral engagement between the acid ring and the container. In this embodiment the acid rings are compressed sufficiently to deform the acid rings so that the acid ring tapers inwardly along the entire length of the ring, that is from the circumferential edge of the acid ring to the base of the acid ring.

The 1981 Japanese patent JP56159054 discloses a further embodiment wherein the battery terminal acid rings are deformed along the entire length of the acid ring to form inclined projections on the acid rings that engages the cover to provide effective liquid tightness and thereby provide lateral engagement between the acid ring and the container,

The 1993 Hofmann German patent DE 4127956 A1 discloses a battery terminal wherein the ends of the acid rings have been rounded and the lower acid ring has been provided with a wedge shaped profile to increase the sealing effect with a container and thereby provide lateral engagement between the acid ring and the container.

The 1994 Hofmann German patent DE 4241393 C1 discloses a battery terminal wherein the ends of the acid rings have been rounded and a barb or undercut that forms a hook which is located on the back side of the acid ring. The "hook" on the back side of the deformed acid ring hooks into the plastic container i.e. to lateral restrain the container to prevent the plastic battery container material from shrinking away from the battery terminal. In addition, a further embodiment is disclosed wherein adjacent acid rings are of the same thickness but are angled away from each other in order to laterally restrain the container with respect to the acid rings.

The 1992 Hofmann European patent 0 601 268 B1 discloses a battery terminal wherein the ends of the acid rings either have a rounded end or a triangular shaped end with a barb or hook on the back side of the acid ring. This "hook" on the back side of the deformed acid ring hooks the plastic to prevent the plastic battery container material from shrinking away from the battery terminal by laterally restraining the container with respect to the acid rings.

The 1992 Hofmann European patent application 0 601 268 A1 also discloses the battery terminal wherein the ends of the acid rings either have a rounded end or a triangular shaped end with a barb or undercut or hook on the back sides of the acid ring. In addition, a further embodiment of an acid ring is disclosed wherein two adjacent acid rings, which are of the same thickness, are angled away from each other to laterally restraining the container with respect to the acid rings by forming a dovetail like joint.

The 1989 Hofmann German patent application DE 3942175A1 discloses a method of forming a battery terminal with acid rings by cold rolling the terminal to form the circumferential acid rings.

U.S. Spiegelberg patent 6,644,084 describes a process of forming an acid ring with a hook by first deforming the battery terminal from a rectangular shaped acid ring to an arrowhead shaped acid ring. The transformation to the hook shape is obtained by rotating the battery terminal relative to a cold forming roller to deform an acid ring with a rectangular cross section into an acid ring having an undercut or overhang. The cold rolling process involves substantial deformation of the acid ring on the cast battery part in order to produce the hook for engaging the battery container.

JP 7 235286 A, CH 371 154 A and US 1 411 414 A disclose casting of a lead bushing comprising acid sealing lips each defined by two sidewards extending on lateral surfaces and converging into a common edge so as to form an acute angle.

DE 11 46 149 B discloses a method of making a battery terminal comprising forming a plurality of acid rings each having a lip formed by a first lateral surface and a second surface, wherein the first lateral surface and the second surface have an included angle less than 90 degrees.

While the prior art provides acid rings with rectangular shapes that are either bent or transformed into a different shape by cold rolling to form a lateral restraint between the battery container and the terminal. The lateral restraint is obtained by either forming a hook on the acid ring or forming a dovetail or dovetail like engagement between the battery container and the battery terminal.

In contrast to the prior art acid rings, where the shape of the acid ring is substantially altered, in the present invention one can cast a battery part with the acid ring having a bifurcated end separated by a circumferential grove or an end with a single annular tapered lip. The bifurcated end results in two outwardly extending annular lips on each acid ring. The annular lips on each acid ring are flared away from each other to produce a beveled surface or sealing bead along an annular outer portion of each of the annular lips which not only laterally restrains the container with respect to the terminal but also forms an enhanced sealing region between the container and the acid ring, In addition the circuitous path provided by the bifurcated acid rings can increase the resistance to electrolyte leakage by providing a more tortuous interface between the acid rings and the container.

A further feature of the invention is the flaring of the lips can be obtained by applying a radial compressive force to the bifurcated ends of the acid ring. Since only the bifurcated ends of the acid ring are flared it substantially eliminates problems that can occur with prior art cold forming deformation of a pressure cast battery terminal. That is, an interface between a die cast portion of battery terminal and a cold rolled portion of the battery terminal can lead to cracks or stress areas between the cast region and the cold formed region of the battery part, which can be subject to electrolyte leakage therethrough. By minimizing the interface one can minimize the opportunity for leakage.

Thus the flaring of the lips on the bifurcated acid ring of the present invention produces a back flare sealing region that extends circumferential around the terminal which not only enhances sealing but also restrains lateral engagement between the container and the acid rings and at the same time minimizing the occurrences of fractures or stress cracks in metal that has a portion of the original die cast shape altered by cold rolled deformation.

The present invention provides a battery part that eliminates the substantial deformation or acid ring transformation necessary to either form an under cut or overhang on the acid ring or to deform an acid ring along its entire length to form a dovetail engagement as shown in GB 1236495; GB 1,245,255; JP 5619054 and EPO 06012681A1. In addition, the present invention further eliminates the need to mechanically deform the acid ring from a rectangular shape to an arrow head shaped acid ring or to an acid ring with a hook or an acid ring with a beveled surface that extends along the entire length of the acid ring as shown in EPO06012681B1 and DE 4241393;

Thus, by flaring the lip or lips on the circumferential end of the acid ring one can form annular sealing regions, laterally restrain the container with respect to the acid ring, and inhibit electrolyte from escaping from the battery container with a more tortuous path. Not only does the present invention inhibit escape of electrolyte by providing a circumferential sealing ring it also make it easier to flow the plastic around the acid ring since the flared lip extends along only a portion of the acid ring. In addition, the present process minimizes stress produced in the battery part when a substantial part of a die cast battery terminal is subsequently transformed to a substantially different shape by cold rolling since the lips on the end of the acid ring can be flared instead of mechanically deformed into an entirely different shape.

### SUMMARY OF THE INVENTION

The invention relates to a method of forming a battery terminal as claimed in claim 1. Briefly, the invention comprises a battery part such as a battery terminal with the battery part having an inclined sealing region or sealing bead located on a lateral face of the acid ring with the sealing region increasing the resistance to leakage therepast as the container shrinks. Another embodiment of the invention comprises a battery part with a bifurcated acid ring end and a beveled end face. The invention further includes the method of forming a battery terminal with an end face of the acid ring having a bifurcated end and a beveled face that permits one to use the battery terminal in a flared condition wherein the lips on the bifurcated end of the acid ring are flared to form a beveled sealing region that functions like an "O-ring" on the backside of the lip of the acid ring.

### BRIEF DESCRIPTION OF THE DRAWINGS

Figure 1 is a partial cross sectional view of a battery terminal with bifurcated acid rings;
Figure 2 is a partial cross sectional view of a chamber having a fluidized particles that impinge on a battery part therein;
Figure 3 is a partial cross sectional view of the battery terminal of Figure 1 after being exposed to the fluidized media or particles as illustrated in Figure 2;
Figure 4 is a partial side view showing radial peening members for folding over the ends of the bifurcated acid rings on a battery terminal;
Figure 5 is a top view of three radial peening members located around the periphery of a the a battery terminal with bifurcated acid rings;
Figure 6 is a partial side view of a battery terminal having a set of acid rings with a valley or groove in the end face of the acid rings;
Figure 7 is a top view of the battery terminal of Figure 8 in a collet;
Figure 7A is a sectional side view showing the beveled surfaces and the lateral surface on an acid ring with bifurcated lips;
Figure 7B is an enlarged view of a portion of the acid rings to reveal the beveled sealing surfaces on the acid ring; and
Figure 8 is a partial side view of the battery terminal of Figure 6 in a collet in an expanded condition;
Figure 9 is a partial side of the battery terminal and collet when the collet is partially contracted;
Figure 10 is a partial side view of the battery terminal of Figure 6 when the collet is in a contracted condition;
Figure 11 is a partial side view of the battery terminal of Figure 6 with the acid rings having been deformed by the collet;
Figure 12 is side view of an alternate acid ring being formed with a single lip on each acid ring;
Figure 13 shows a tapered collet for deformed the battery terminal;
Figure 14 shows a partial cross section view of a set of acid rings that have been deformed by the collet of Figure 13.

### DESCRIPTION OF THE PREFERRED EMBODIMENT

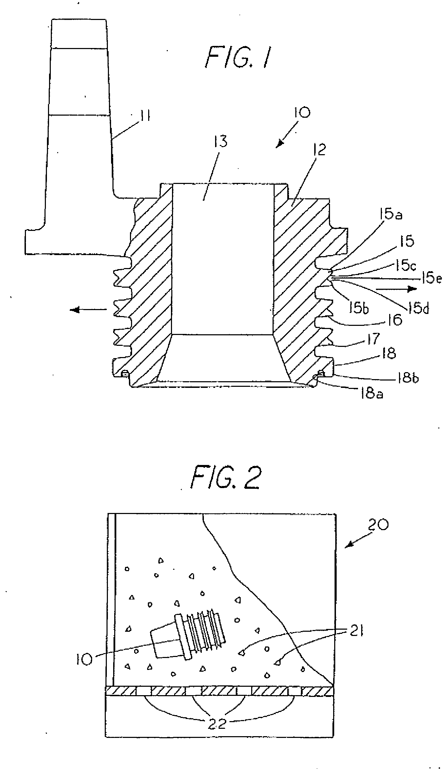

Figure 1 shows a battery part 10 comprising a battery terminal having an upward extending lug 11 and a hollow base 12 having a central opening 13 therein. Located around the exterior of battery terminal 10 is a set of bifurcated annular acid rings 15, 16, 17, and 18 that have been formed by a die casting process. That is, a segmented mold (not shown) which radially surrounds the sides of battery part 10 during the casting process has been pulled radially away from the battery part 10 to release the battery part from the mold. Due to the configuration of the battery part and the need to pull the side mold parts radially or laterally away from the terminal the intermediate acid rings 15, 16 and 17 are oftentimes each provided with a slight tapered. Each of the acid rings 15, 16 and 17 have been cast with an annular V shaped groove located in the end of each of the acid rings. The placement of the groove in the end of acid ring generates a bifurcated circumferential end to the acid ring with each of the bifurcated ends including radially extending annular lips which are located along the opposite lateral faces of the acid rings 15, 16 and 17. Thus, a feature of the present invention is a battery terminal wherein the cast battery terminals comprising a bifurcated acid ring 15 with a die cast upper annular lip 15a and a die cast lower annular lip 15b. The end face of each of the acid rings are shown with an interior side surface or a bevel face 15c and interior side surface or a bevel face 15b that are joined at the root of the acid ring to form a V shaped annular groove 15e. Similarly, each of the bifurcated acid rings 16 and 17 have identical lips that form an apex at the root of the lips and a V shaped annular groove on the periphery of the annular acid ring.

In the embodiment shown in Figure 1 the lower acid ring 18 is provide with an undercut 18a which can be formed by an end mold (not shown) that coacts with the side molds. That is, the end mold can be used to form the annular downward extending lip 18b since the end mold can be moved axially away from the end of the mold when the battery part is released from the mold.

Thus a feature of the present invention is the ability to cast a battery terminal wherein after the casting process has been completed at least one of the acid rings contains a lip or overhang 18b that can be used to seal the battery terminal to a battery container. Although an overhang 18 can be cast with the present process of forming bifurcated acid rings one may elect not to cast a terminal with an overhang and instead use only the flared bifurcated ends of the acid rings to maintain the sealing relationship between the container and the terminal.

Figure 2 illustrates the battery terminal 10 located in a fluidized bed having particles 21 that impinge on the exterior surfaces or beveled end face of the acid rings 15, 16 and 17 of the battery terminal through the introduction of fluid through lower openings 22. The impingement of the particles, which are preferably harder than the battery part, provide a two-fold effect. The first effect is that the particles impinging the battery part can polish the exterior surface of the battery part. The second effect is that it has been found that the impingement of particles on the beveled end surfaces of the acid ring can causes the lips of annular acid rings to fold over or flare out and create a beveled sealing region or sealing bead much like an O-ring on the lateral face of the acid rings. Thus, a feature of the present invention is that one eliminates the need to form a "hook like" connection between the battery terminal and the battery container or to deform the entire acid ring into a dovetail.

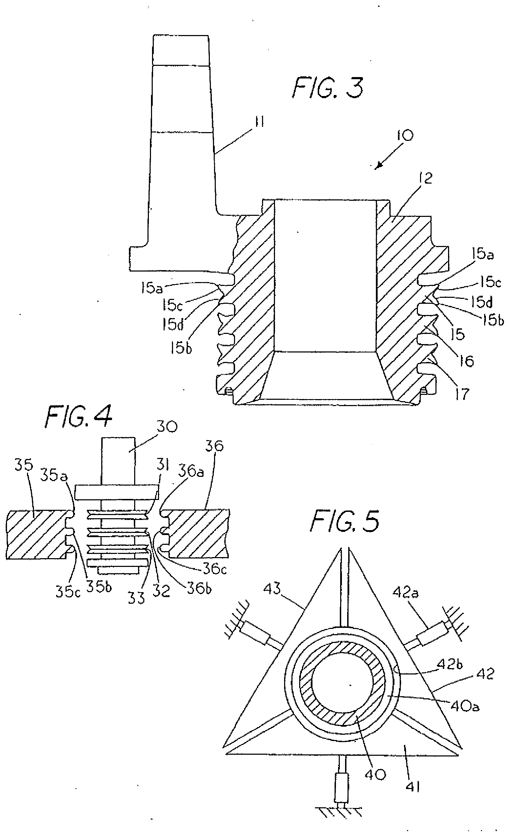

A reference to Figure 3 shows how battery part 10 appears after being subjected to impingement from fluidized particles. To illustrate the folding or flaring of the annular lip reference should be made to acid ring 15 which shows lip 15a curved upward and lip 15b curved downward. That is, the impingement of particles on the bevel surface 15c and 15d occurs with sufficient force so that the annular lips 15a and 15b are flared outward to thereby creating a sealing region on the backside thereof for sealing engaging and restraining a battery container without the need for forming a hook on the battery part. Since the angled surfaces 15c and 15d transmit a portion of the force in an axial direction the lip can be flared or folded outward through the radial impingement of particles on the angled surfaces 15c and 15d. As each of the bifurcated annular rings 16 and 17 have identical annular lips each of the bifurcated annular rings 16 and 17 produce a sealing region on the lateral face of the acid sealing rings for sealing engagement between container and terminal while laterally restraining a battery container with respect to the terminals without the use of a hook which could trap air therein during the formation of the container and consequently produce regions with enhanced risk of electrolyte leakage. However, if the lips are flared outward slightly to produce a sealing bead the trapped air can flow smoothly outward during the molding process and one need not be concerned with air being trapped in a "hook" on the backside of the acid ring.

While the battery part has been placed in a fluidized bed so that particles can be directed against the beveled side surface of the acid rings other methods of impinging particles against the surface such as in a tumbler where the battery part and harder media are allowed to contact the battery part as the media and the battery part are tumbled about can be used to deform the annular lips on the cast battery part. That is, in another flaring process the use of a deformable material such as a lead or lead alloy allows one can flare or bend the lips on the acid rings to the desired shape through contact of an article or particles with the angled side surfaces on the axially spaced circumferential acid rings.

Figure 4 shows a side elevation view of a different system and method for folding or flaring the annular lips into a container engaging protrusion or sealing region on the terminal. In the embodiment shown the battery terminal 30 contains annular acid rings 31 with a V-shaped groove in the end face. A set of radially displaceable peening or flaring members 35 and 36 are positioned proximate the acid rings. In the embodiment shown the peening member 35 includes curved protrusions 35a, 35b and 35c which are located in the same plane as acid rings 31, 32 and 32. Similarly, peening member 36 includes peening protrusions 36a, 36b and 36c that are located in the same plane as acid rings 31, 32 and 33. The radial inward displacement of member 35 and 36 brings the peening protrusions into engagement with the V-shaped grooves in each of the acid rings which causes the annular lips of the acid rings to be folded outward or flared outward as illustrated in Figure 3 to thereby form a sealing region or a rigid sealing ring on the backside of the acid ring.

Figure 5 shows a bottom view of how a multiple part radial peening member can peen or compress the bifurcated acid rings so each of the acid rings have a lip or protrusion for engaging a container. In the embodiment shown, a first arcuate shaped peening member 42 which is radially postionable through a hydraulic cylinder 42a includes a peening surface 42b that is an alignment with the acid ring 40a. Similarly, positioned around terminal 40 are peening members 41 and 43 that cooperate to form a closed annular peening member that engages and folds or flares the lips on the annular acid ring backward into the hooking or container engaging protrusion illustrated in Figure 3 by radial inward displacement of the peening members into the angled side surfaces of the annular lips on the acid ring. Thus Figure 5 illustrates one method of forming sealing regions on the bifurcated acid rings by directing a member into the V-shaped grooves in the end faces of the bifurcated acid rings.

While the invention has been described in regard to die casting the battery terminal could also be formed from other casting methods or through cold forming.

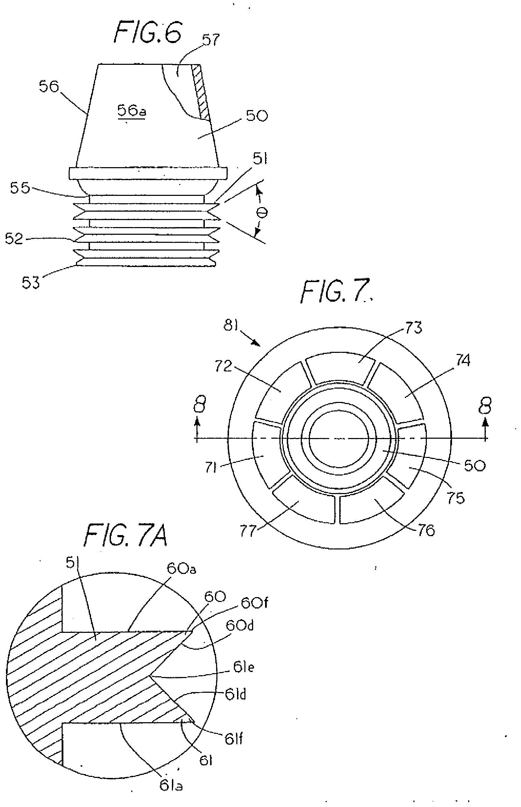

Figure 6 shows a preferred embodiment of the invention comprising a battery part 50 such as a battery terminal with a set of spaced bifurcated acid rings 51, 52 and 53. The bifurcated acid rings extend around the peripheral region of the battery part and can have any number of shapes including circular, hexagonal or the like. Although one acid ring can be sufficient for engagement with a battery container the battery part 50 generally includes at least three lateral spaced acid rings that extend radially outward from the base 55 of battery part 50.

Battery part 50 includes a connector lug 56 having an exterior surface 56a for forming an electrical connection to an external device. In the embodiment shown the battery terminal 50 includes a hollow central opening 57 to permit one to pour molten metal therein to form an electrical connection to an internal battery components such as a battery plate or the like.

Figure 7A shows an isolated view of a portion of bifurcated acid ring 51 to reveal in detail the lip 60 with a first face or lateral face 60a on one side and a second face, namely a beveled end face 60d on the other side of lip 60 with the lateral face 60a and the beveled end face 60d forming an included angle of less than 90 degrees therebetween. Similarly, a second lip 61 includes a first face or lateral face 61a on one side and a second face, namely, a beveled end face 61d on the opposite side with the lateral face 61a and the beveled end face 61d forming an included angle of less than 90 degrees therebetween. In addition, the beveled end face 60d intersects beveled end face 61d at an apex 61e to form a valley or V-shaped groove between the lip 60 on one face of the acid ring and the lip 61 on the opposite face of the acid ring 51.

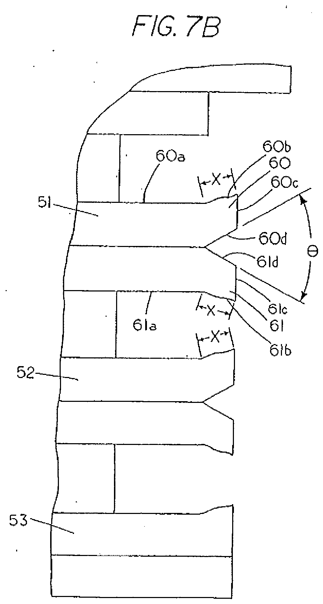

Figure 7B shows acid rings 51, 52 and 52 in a partial view in Figure 7A with the lips in a flared condition to form a lateral sealing region or sealing bead on the lateral faces of the acid rings to thereby enhance the sealing of a battery container to the terminal. The beveled surface 60d of the first lip 60 and the beveled surface 61d of second lip 61 are located at approximately a ninety degree angle to each other although the angle can vary depending on the selection of the angle of the beveled surface for each lip. In the embodiments shown the lips 60 and 61 which were previously in an unflared condition (Figure 7A) and an apex 60f and 61 have been transformed to a flared condition. The lip 60 has a an extended flat surface 60c and lip 61 has an extended flat surface 61c.

While Figure 7A illustrates the acid ring in the unflared condition, Figure 7B shows the acid rings in a flared condition. In the flared condition the lips on the bifurcated acid rings have been flared laterally to form a sealing region or sealing bead along the lateral faces of the acid rings.

Figure 7A shows acid ring 51 in the as cast condition revealing lip 60 and lip 61 in an a straight or unflared condition. In the embodiments shown bifurcated acid ring 51 has a first lateral face 60a and a second lateral face 61 located in a substantially parallel relation ship to each other.

Figure 7B shows bifurcated acid ring 51 in the flared condition. In the flared condition the bifurcated acid ring 51 includes a first circumferential end face 60c and a second circumferential end face 61c separated by a first circumferential beveled end face 60d and a second circumferential beveled end face 61d. In the flared condition a first circumferential sealing region or sealing bead 60b extends around the outer portion of lateral face 60a and a second circumferential sealing region or sealing bead 61b extends around the outer portion of lateral surface 61a. As can be seen in Figure 7B the lip 60c located on the acid ring 51 and the lip 61 located on acid ring 51 have been flared upward to form the respective sealing regions 60b and 61b. The sealing regions have a lateral length denoted by x and extend partially along the lateral faces of the acid ring. Each of the sealing regions extend circumferentially around the battery terminal to provide a 360 degree sealing barrier between the container and the battery container.

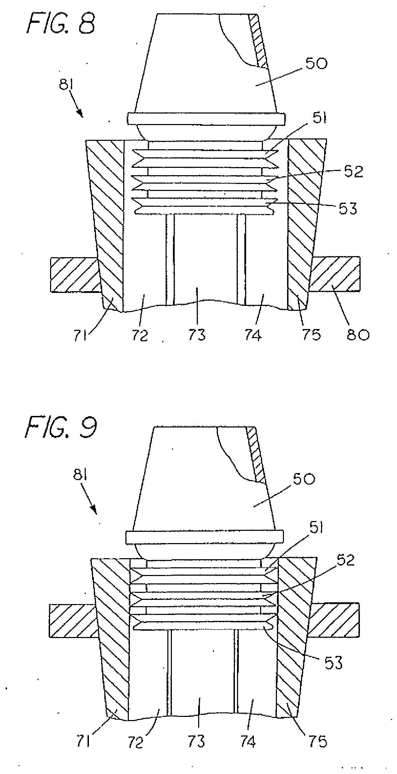

In order to appreciate the transformation of the battery terminal with a bifurcated acid ring into a battery terminal with cantilevered sealing regions reference should be made to Figure 7 and 8 which shows a collet 81 in top view. Figure 8 shows a section view the battery terminal 50 positioned between a set of cantilever mounted splines 71, 72, 73, 74 and 75 on the collet 81. Figures 7-10 illustrate a battery terminal placed in collet 81 and the collet collapsed to radially compress the lips on the acid ring to form a sealing bead on the lateral surface of the bead.

Figure 7 shows a top view of the battery terminal 50 centrally positioned between the splines 71-77 that are cantilevered held in a base member (not shown). A compression collar 80 extends around each of the splines so that when the collar is forced upward the splines are brought radially inward to flare the lips on acid rings 51, 52 and 53.

Figure 8 shows a section view of collet 81 surrounding battery terminal 50 with the splines 71, 72, 73 and 74 in a spaced condition about the bifurcated acid rings 51, 52 and 53, If desired a mandrel (not shown) can be inserted into battery terminal 50 to hold the battery terminal in postion.

Figure 9 shows the initial step in the formation of the sealing regions on the bifurcated acid rings 51, 52 and 53. In this condition the splines 71-75 have been brought into contact with the lips on the bifurcated acid rings 51, 52 and 53 while the acid rings are free to self center in the collet.

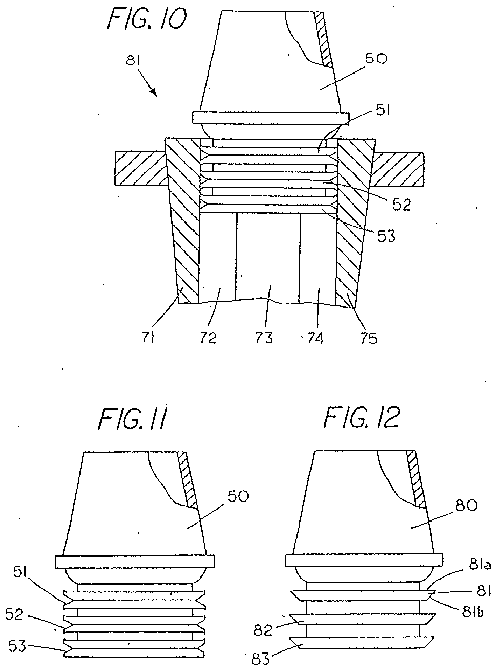

Figure 10 shows the compression step wherein the splines 71-75 have been squeezed radially inward to flare the lips on acid rings 51, 52 and 53 sufficient to form a sealing bead on the lateral surface of each of the lips on the acid rings but insufficient to form the lips into a hook. That is the deformation, which is shown in greater detail in Figure 7B, produces an inclined sealing region or sealing bead that extends along a portion of the backside of the flared lip of the acid ring. In the embodiment shown the radius of curvature of the collet and the radius of curvature of the acid rings are substantially equal so as to produce a uniform flaring of the lip.

Figure 11 shows terminal 50 after compression by collet 81. As can be seen in Figure 11 each of the lips on the acid rings 51, 52 and 53 have been flared to create the sealing regions illustrated in Figure 7B. In contrast to the deformation of the rectangular shaped acid rings as shown in the prior art the compression of the bifurcated acid ring involves only a slight deflecting of the lips to create the sealing bead thus minimizing the stress lines that can be caused by the junction between a cold forming portion on a die cast battery terminal.

Figure 12 is side view of a battery part 80 wherein the acid rings 81, 82 and 83 are formed with a single lip on each acid ring. That is acid ring 81 has a lateral surface 81a and a beveled surface 81b that form an angle of less than 90 degrees and preferably 45 degrees of less so as form a lip that can be flared upward sufficiently to form a sealing bead on the lateral surface 81. In this embodiment the radial compression with the collet will form a top beveled sealing region on each lip to laterally restrain the container and simultaneously form an effective seal that inhibits the loss of electrolyte therepast.

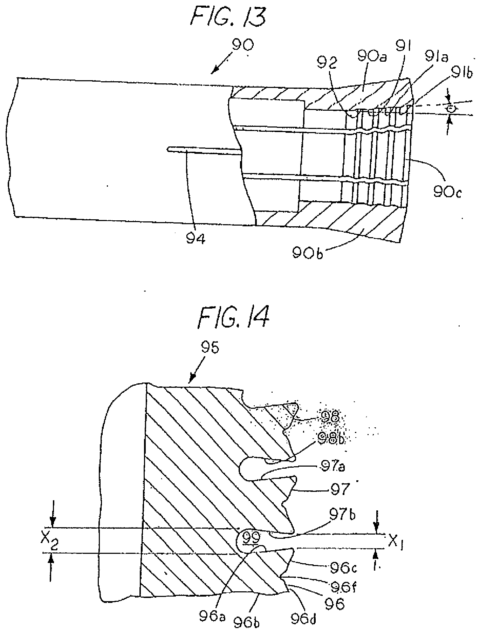

Figure 13 shows a collet 90 having a base with cantilevered sections 90b, 90a and 90c. Located on an inside face of the cantilevered collet sections are a set of annular ridges 91, 91a and 91b.. An annular ridge 91 is adjacent a recess 92 as are the other ridges 91a and 91b also proximate a recess. In the embodiment shown the collet makes an angle 0 with a line parallel to a central axis of the collet. The purpose of the angle in the collet face is to allow one to form acid rings on a battery terminal having a tapered base. The spacing of each of the ridges on collet 90 are such that the ridges align with the V shaped recess in the bifurcated acid ring as illustrated in Figure 4.

Figure 14 shows a partial sectional view of a battery terminal 95 wherein the collet 90 of Figure 13 has been used to compress the bifurcated acid rings 96, 97 and 98. Each of the bifurcated acid rings have been radially compressed to deform the acid rings so as to produce a tear drop shaped recess 99 between adjacent acid rings wherein the lower part of the recess has a width x₂ that is larger than the entry region width x₁ to the recess to thereby form a retaining pocket to received the molten material used to form the container around the battery terminal. As shown in Figure 14 the bifurcated acid ring 96 has an upper curved face 96c and a lower curved face 96d on opposite side of the undeformed portion 96f of the bifurcated acid ring 96 as a result of the acid ring having been deformed radially inward by collet 90. When each of the acid rings are subject to a squeezing by collet 90 the compression results in a smoothly curved surface 96a on the top side of acid ring 96 and a smoothly curved surface 97b on the bottom side of acid ring 97 that coact to form a tear drop shaped recess 99 for locking a battery container thereto. Similarly, the acid ring 98 has been deformed and the lower curved surface 97b coacts with upper curved surface 96a to form a further tear drop shaped pocket therebetween that can trap the molten plastic therein and assist in forming a leakproof seal. As can be seen in Figure 14 each of the acid rings converges from an exterior portion of the acid ring to an internal portion of the acid ring. For example, surface 96c and 96b of acid ring 96 smoothly curve from the outer most portion or entry region to the recess to the inner most point or the bottom of the recess.

While the invention has been shown with circular battery terminals the invention can also be used with battery terminals that are other than circular such as oblong. In those instance a multiple part die as opposed to a collet can be used to deform the bifurcated acid rings into a condition where a retaining pocket is formed between.

## Claims

1. A method of making a battery terminal comprising:
forming an acid ring (15, 16, 17, 51, 52, 53) having a first lip (15a, 60) and a second lip (15b, 61), wherein the first lip and the second lip each include a lateral surface (15a, 15b, 60a, 61a) and an angled surface (15c, 15d, 60d, 61d), wherein the lateral surface (15a, 60a, 61a, 81a) and the angled surface (15c, 15d, 60d, 61d) have an included angle less than 90 degrees; and **characterized by** flaring the first lip (15a, 60) away from the second lip (15b, 61) thereby forming a sealing region on the individual lateral surfaces (15a, 15b, 60a, 61a).

2. The method of claim 1 wherein forming the acid ring (15, 16, 17, 51, 52, 53) comprises casting the battery terminal (10, 30, 50) in a mold.

3. The method of claim 2, further comprising:
placing the battery terminal (10, 30, 50) in a collet having a first radius of curvature that is substantially the same as a second radius of curvature of the acid ring (15, 16, 17, 18, 52, 53); and
collapsing the collet to radially compress the individual lips (15a, 15b, 60, 61) to form the sealing region on the lateral surfaces of the corresponding lips.

4. The method of claim 1 wherein making the battery terminal (10, 30, 50) comprises making the battery terminal (10, 30, 50) from a lead alloy.

5. The method of claim 1 wherein flaring the first lip away from the second lip comprises radially striking the angled surfaces (15c, 15d, 60d, 61d) to form the sealing region on the corresponding lateral surfaces (15a, 15b, 60a, 61a).

6. The method of claim 1 wherein flaring the first lip away from the second lip comprises placing the battery terminal (10, 30, 50) in a hopper containing free particles for randomly impinging on the angled surfaces (15c, 15d, 60d, 61d) to thereby flare the corresponding lips (15a, 15b, 60, 61).

7. The method of claim 6 wherein the particles include particles having a hardness greater than the hardness of the battery terminal.

8. The method of claim 1 wherein flaring the first lip away from the second lip comprises impacting the individual angled surfaces (15c, 15d, 60d, 61d) with a peening member to form the sealing region on the corresponding lateral surfaces (15a, 60a, 61a).

9. The method of claim 1 wherein the angled surface (15c, 60d, 61d) of the first lip (15a, 60) and the angled surface (15d, 60d, 61d) of the second lip (15b, 61) are formed in a V-shaped groove.

10. The method of claim 1 wherein the acid ring is a first acid ring, and further comprising forming at least a second acid ring (15, 16, 17, 18, 51, 52, 53) having at least two circumferential lips.

11. The method of claim 1 wherein flaring the first lip away from the second lip comprises applying a radially compressive force insufficient to bend the lip (15a, 15b, 60, 61) into a hook.

12. The method of claim 1, wherein flaring the first lip away from the second lip further comprises forming a first circumferential end surface (60c) on the first lip and a second circumferential end surface (61c) on the second lip.

13. The method of claim 12 wherein the first circumferential end surface and the second circumferential end surface are separated by the angled surface of the first lip (60d) and the angled surface of the second lip (61d).

14. The method of claim 1 wherein flaring the first lip away from the second lip comprises locating the angled surfaces of the first and second lips (60d, 61d) at approximately a ninety degree angle to each other.

## Patentansprüche

1. Ein Verfahren des Herstellens eines Batteriepols, aufweisend:
Ausbilden eines Säurerings (15, 16, 17, 51, 52, 53), welcher eine erste Lippe (15a, 60) und eine zweite Lippe (15b, 61) aufweist, wobei die erste Lippe und die zweite Lippe jeweilig eine Lateralfläche (15a, 15b, 60a, 61a) und eine abgewinkelte Fläche (15c, 15d, 60d, 61d) aufweisen, wobei die Lateralfläche (15a, 15b, 60a, 61a) und die abgewinkelte Fläche (15c, 15d, 60d, 61d) einen eingeschlossenen Winkel, der kleiner als 90 Grad ist, haben, und
**gekennzeichnet durch**
Aufweiten der ersten Lippe (15a, 60) weg von der zweiten Lippe (15b, 61), wodurch ein Abdichtbereich an den jeweiligen Lateralflächen (15a, 15b, 60a, 61a) gebildet wird.

2. Das Verfahren gemäß Anspruch 1, wobei das Ausbilden des Säurerings (15, 16, 17, 51, 52, 53) aufweist Gießen des Batteriepols (10, 30, 50) in einer Form.

3. Das Verfahren gemäß Anspruch 2, ferner aufweisend:
Platzieren des Batteriepols (10, 30, 50) in einer Klemmeinrichtung, welche einen ersten Krümmungsradius, welcher im Wesentlichen der gleiche wie ein zweiter Krümmungsradius des Säurerings (15, 16, 17, 18, 52, 53) ist, aufweist, und
Zusammenziehen der Klemmeinrichtung, um die jeweiligen Lippen (15a, 15b, 60, 61) radial zusammenzudrücken, um den Abdichtbereich an den Lateralflächen der korrespondierenden Lippen zu bilden.

4. Das Verfahren gemäß Anspruch 1, wobei das Herstellen des Batteriepols (10, 30, 50) aufweist Herstellen des Batteriepols (10, 30, 50) aus einer Bleilegierung.

5. Das Verfahren gemäß Anspruch 1, wobei das Aufweiten der ersten Lippe weg von der zweiten Lippe aufweist radiales Schlagen der abgewinkelten Flächen (15c, 15d, 60d, 61d), um den Abdichtbereich an den korrespondierenden Lateralflächen (15a, 15b, 60a, 61a) zu bilden.

6. Das Verfahren gemäß Anspruch 1, wobei Aufweiten der ersten Lippe weg von der zweiten Lippe aufweist Platzieren des Batteriepols (10, 30, 50) in einem Behälter, der freie Partikel zum zufälligen Aufprallen auf den abgewinkelten Fläche (15c, 15d, 60d, 61d), um dadurch die korrespondierenden Lippen (15a, 15b, 60, 61) aufzuweiten, enthält.

7. Das Verfahren gemäß Anspruch 6, wobei die Partikel Partikel aufweisen, welche eine Härte, die größer als die Härte des Batteriepols ist, haben.

8. Das Verfahren gemäß Anspruch 1, wobei Aufweiten der ersten Lippe weg von der zweiten Lippe aufweist Einwirken auf die jeweiligen abgewinkelten Flächen (15c, 15d, 60d, 61d) mit einem hämmernden Element, um den Abdichtbereich an den korrespondierenden Lateralflächen (15a, 60a, 61a) zu bilden.

9. Das Verfahren gemäß Anspruch 1, wobei die abgewinkelte Fläche (15c, 60d, 61d) der ersten Lippe (15a, 60) und die abgewinkelte Fläche (15d, 60d, 61d) der zweiten Lippe (15b, 61) in einer V-förmigen Nut ausgebildet sind.

10. Das Verfahren gemäß Anspruch 1, wobei der Säurering ein erster Säurering ist und ferner aufweisend Ausbilden mindestens eines zweiten Säurerings (15, 16, 17, 18, 51, 52, 53), welcher mindestens zwei Umfangslippen aufweist.

11. Das Verfahren gemäß Anspruch 1, wobei Aufweiten der ersten Lippe weg von der zweiten Lippe aufweist Anwenden einer radial zusammendrückenden Kraft, welche nicht ausreichend ist, um die Lippe (15a, 15b, 60, 61) in einen Haken zu verbiegen.

12. Das Verfahren gemäß Anspruch 1, wobei Aufweiten der ersten Lippe weg von der zweiten Lippe ferner aufweist Ausbilden einer ersten Umfangsendfläche (60c) an der ersten Lippe und einer zweiten Umfangsendfläche (61c) an der zweiten Lippe.

13. Das Verfahren gemäß Anspruch 12, wobei die erste Umfangsendfläche und die zweite Umfangsendfläche voneinander durch die abgewinkelte Fläche der ersten Lippe (60d) und die abgewinkelte Fläche der zweiten Lippe (61d) getrennt sind.

14. Das Verfahren gemäß Anspruch 1, wobei Aufweiten der ersten Lippe weg von der zweiten Lippe aufweist Anordnen der abgewinkelten Flächen der ersten und der zweiten Lippe (60d, 61d) mit ungefähr einem Neunzig-Grad-Winkel zueinander.

## Revendications

1. Procédé pour fabriquer une borne de batterie comprenant l'étape consistant à :
former un anneau acide (15, 16, 17, 51, 52, 53) ayant une première lèvre (15a, 60) et une seconde lèvre (15b, 61), dans lequel la première lèvre et la seconde lèvre comprennent chacune une surface latérale (15a, 15b, 60a, 61a) et une surface coudée (15c, 15d, 60d, 61d), dans lequel la surface latérale (15a, 60a, 61a, 81a) et la surface coudée (15c, 15d, 60d, 61d) ont un angle inclus inférieur à 90 degrés ; et
**caractérisé par** l'étape consistant à :
évaser la première lèvre (15a, 60) en s'écartant de la seconde lèvre (15b, 61) formant ainsi une région d'étanchéité sur les surfaces latérales (15a, 15b, 60a, 61a) individuelles.

2. Procédé selon la revendication 1, dans lequel l'étape consistant à former l'anneau acide (15, 16, 17, 51, 52, 53) comprend l'étape consistant à mouler une borne de batterie (10, 30, 50) dans un moule.

3. Procédé selon la revendication 2, comprenant en outre les étapes consistant à :
placer la borne de batterie (10, 30, 50) dans une pince ayant un premier rayon de courbure qui est sensiblement identique à un second rayon de courbure de l'anneau acide (15, 16, 17, 18, 52, 53) ; et
replier la pince pour comprimer radialement les lèvres (15a, 15b, 60, 61) individuelles afin de former la région d'étanchéité sur les surfaces latérales des lèvres correspondantes.

4. Procédé selon la revendication 1, dans lequel l'étape consistant à fabriquer la borne de batterie (10, 30, 50) comprend l'étape consistant à fabriquer la borne de batterie (10, 30, 50) à partir d'un alliage de plomb.

5. Procédé selon la revendication 1, dans lequel l'étape consistant à évaser la première lèvre en s'écartant de la seconde lèvre comprend l'étape consistant à frapper les surfaces coudées (15c, 15d, 60d, 61d) pour former la région d'étanchéité sur les surfaces latérales (15a, 15b, 60a, 61a) correspondantes.

6. Procédé selon la revendication 1, dans lequel l'étape consistant à évaser la première lèvre en s'écartant de la seconde lèvre comprend l'étape consistant à placer la borne de batterie (10, 30, 50) dans une trémie contenant des particules libres pour empiéter, de manière aléatoire, sur les surfaces coudées (15c, 15d, 60d, 61d) afin d'évaser ainsi les lèvres (15a, 15b, 60, 61) correspondantes.

7. Procédé selon la revendication 6, dans lequel les particules comprennent des particules ayant une dureté supérieure à la dureté de la borne de batterie.

8. Procédé selon la revendication 1, dans lequel l'étape consistant à évaser la première lèvre en s'écartant de la seconde lèvre comprend l'étape consistant à impacter les surfaces coudées (15c, 15d, 60d, 61d) individuelles avec un élément de martelage afin de former la région d'étanchéité sur les surfaces latérales (15a, 60a, 61a) correspondantes.

9. Procédé selon la revendication 1, dans lequel la surface coudée (15c, 60d, 61d) de la première lèvre (15a, 60) et la surface coudée (15d, 60d, 61d) de la seconde lèvre (15b, 61) sont formées en une rainure en forme de V.

10. Procédé selon la revendication 1, dans lequel l'anneau acide est un premier anneau acide, et comprenant en outre l'étape consistant à former au moins un second anneau acide (15, 16, 17, 18, 51, 52, 53) ayant au moins deux lèvres circonférentielles.

11. Procédé selon la revendication 1, dans lequel l'étape consistant à évaser la première lèvre en s'écartant de la seconde lèvre comprend l'étape consistant à appliquer une force de compression radiale insuffisante pour plier la lèvre (15a, 15b, 60, 61) en un crochet.

12. Procédé selon la revendication 1, dans lequel l'étape consistant à évaser la première lèvre en s'écartant de la seconde lèvre comprend en outre l'étape consistant à former une première surface d'extrémité circonférentielle (60c) sur la première lèvre et une seconde surface d'extrémité circonférentielle (61c) sur la seconde lèvre.

13. Procédé selon la revendication 12, dans lequel la première surface d'extrémité circonférentielle et la seconde surface d'extrémité circonférentielle sont séparées par la surface coudée de la première lèvre (60d) et la surface coudée de la seconde lèvre (61d).

14. Procédé selon la revendication 1, dans lequel l'étape consistant à évaser la première lèvre en s'écartant de la seconde lèvre comprend l'étape consistant à positionner les surfaces coudées des première et seconde lèvres (60d, 61d) approximativement à un angle de quatre-vingt-dix degrés l'une par rapport à l'autre.
